(19) Europäisches Patentamt
European Patent Office
Office européen des brevets

(11) **EP 3 435 314 A1**

(12) **EUROPEAN PATENT APPLICATION**

(43) Date of publication:
**30.01.2019 Bulletin 2019/05**

(51) Int Cl.:
***G06Q 30/02*** *(2012.01)*    ***G06Q 50/00*** *(2012.01)*
***G06Q 50/26*** *(2012.01)*

(21) Application number: **17183719.8**

(22) Date of filing: **28.07.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Ecole Polytechnique Fédérale de Lausanne (EPFL)**
**1015 Lausanne (CH)**

(72) Inventors:
• **Taziki, Mahsa**
**1020 Renens (CH)**
• **Guerraoui, Rachid**
**1170 Aubonne (CH)**

(74) Representative: **Vesterinen, Jussi Tapio et al**
**LUMI IP GmbH**
**Jägerweg 12**
**3014 Bern (CH)**

(54) **UTILITY AND PRIVACY EFFECTS OF A USER ACTION IN A COMMUNICATION SYSTEM**

(57)    The present invention concerns a method of determining an effect of a user action taken with respect to an item in a communication network. The item is associated with data content in the communication network. The method comprises: (a) determining (31) public information in the communication network (1), the public information comprising ratings given by user actions taken with respect to the items in the set of items; (b) determining (33) a probabilistic user model of a first user, the probabilistic user model being at least partially derived from the public information; (c) determining (35) a first disclosure degree for a second user, the first disclosure degree depending on the probabilistic user model, the first disclosure degree indicating information content amount of a user profile of the second user before an action by the second user taken with respect to an item in the set of items; (d) determining (37) a second disclosure degree for the second user, the second disclosure degree depending on the probabilistic user model, the second disclosure degree indicating information content amount of the user profile of the second user after the action by the second user; and (e) determining (39) a disclosure risk of the action by the second user on the item in the set of items. The disclosure risk depends on the first and second disclosure degrees.

Fig. 6a

From Fig. 6a

37 — Determine second disclosure degree

39 — Determine disclosure risk

41 — Make effects available to end user

43 — Receive end user decision

45 — Process end user decision

End

**Fig. 6b**

**Description**

TECHNICAL FIELD

The present invention relates to a method of determining an effect of a user action taken with respect to an item in a communication system. The item is associated with data content, such as a music file, a video file, an image file or a text file. More specifically, the present invention allows determining a privacy effect of a user action, such as a click, and optionally also a utility effect of the user action. The present invention also relates to a processing device configured to carry out the method.

BACKGROUND OF THE INVENTION

The growth of data available online makes it difficult for individuals to extract information relevant to their interests. Recommenders carry out the work for them: they build profiles representing user interests, and recommend items to users based on those profiles, typically using collaborative filtering (CF) schemes. Recommenders are becoming one of the main ways to navigate the internet. They recommend appropriate items to users based on their clicks, ie likes, ratings, purchases etc. These clicks are key to providing relevant recommendations and, in this sense, have a significant utility. Since clicks reflect the preferences of users, but they also raise privacy concerns. At first glance, there seems to be an inherent trade-off between the utility and privacy effects of a click. Nevertheless, a closer look reveals that the situation is more subtle: some clicks do improve utility without compromising privacy, whereas others decrease utility while hampering privacy.

The profiles of users are derived from their actions, such as clicks, eg their likes or dislikes, their purchases, the pages they spend time on etc. On the one hand, clicks have an important effect on the recommender utility for a user. On the other hand, clicks may also disclose private information about users. At first glance, a user might face a dilemma: To click or not to click? The click could improve the utility of a recommender for that specific user, but might simultaneously also disclose private information.

Let us consider as a first illustration, a case of Alice, a user who clicks on "Game of thrones". By doing so, Alice clearly improves utility by helping the recommender find similar users for her. Assuming indeed that a large number of users have watched "Game of thrones", then Alice's click makes her also less distinguishable among those users (than before she clicked). It improves her privacy. There is no trade-off in this case between utility and privacy. If Alice instead had clicked on an esoteric movie, she would have revealed a lot. A curious user (an attacker), knowing through the item profiles that only one user liked that esoteric movie, could eventually deduce the entire profile of Alice. The curious user could create fake profiles containing the esoteric movie and would be recommended the entire profile of Alice. Thus, it would be useful for the internet users to understand when a click induces a trade-off and when it does not. However, currently there are no solutions which enable this.

SUMMARY OF THE INVENTION

It is an object of the present invention to overcome the above-identified problem related to determining utility and/or privacy effects of a user action and their relations.

According to a first aspect of the invention, there is provided a method of determining an effect of a user action taken in respect of an item in a communication network as recited in claim 1.

The proposed new solution has the advantage that the method allows quantifying the effect of a user action in terms of privacy and optionally also in terms of utility. As a result of the method, a numerical value is obtained describing the effect of the user action. This effect can then be made available to the end user if necessary. Alternatively, or in addition, the effect may be used by a website service provider or a quality controller (privacy regulator) between the end user and the service provider. Furthermore, the obtained numerical value is precise thanks to the nature of the proposed method.

According to a second aspect of the invention, there is provided a data processing device configured to carry out the method according to the first aspect of the present invention.

Other aspects of the invention are recited in the dependent claims attached hereto.

BRIEF DESCRIPTION OF THE DRAWINGS

Other features and advantages of the invention will become apparent from the following description of a non-limiting example embodiment, with reference to the appended drawings, in which:

- Figure 1 is simplified schematic view showing a communication system where the teachings of the present invention may be applied;

- Figure 2 is a chart illustrating user ratings given for a set of items according to a simplified example of the present invention;

- Figures 3 to 5 illustrate a click advisor according to an example of the present invention; and

- Figure 6 and 6b are a flow chart illustrating a method of determining utility and privacy effects of a click according to an example of the present invention.

DETAILED DESCRIPTION OF AN EMBODIMENT OF THE INVENTION

An embodiment of the present invention will now be described in detail with reference to the attached figures. In the illustrated embodiment, a user can either like an item, dislike it or ignore it, ie the user does nothing with it. However, the teachings of the invention are not limited to this embodiment. For example, the user could rate the item on a scale from zero to any given number. It is to be noted that in the following description, the user action is a click on an item, but the teachings of the present invention are not limited to clicks. For example, the user action or a set of actions could include eg any one or any combination of the following: scrolling a mouse or a corresponding device, hovering a pointer over an item (mouse hover), a time spent with an action, entering text or giving other inputs, any gesture (eg blink of an eye) or a set of gestures made by the user etc. Furthermore, in the present description, the word rating is to be understood to have a broad meaning. In other words, the word rating (or its plural) covers for example a like and/or a dislike (ie a binary rating), any other numerical (1, 2, 3, 4 etc) or non-numerical value (eg A, B, C, D etc), but is also covers the action of selecting or not selecting an item (eg clicking or not clicking on an item). Identical or corresponding functional and structural elements which appear in the different drawings are assigned the same reference numerals.

As will be explained later in detail, the effect of a click on utility is computed by introducing the notion of commonality of a user profile. Commonality represents by a number how close the taste of a user is to that of other users. This helps a recommender suggest relevant items, which are likely to match the user's preferences. This notion captures precision, the classical well-known measure of the quality of recommenders. The idea of precision has been so far considered as an empirical measure of the utility of a recommender for all the users. In the present invention commonality is computed theoretically, and for every individual user (in a user-centric manner) for a given set of users. It is important to note at this point that two user profiles might be very different, and yet might have the same commonality, fundamentally meaning that they could be recommended the same number of relevant items but not necessarily the same items. In the example below, the difference between the commonality of a user profile, before and after the click, is what is defined as the utility of the click.

According to the present invention, the privacy effect of a click is computed through the concept of disclosure degree of a user profile, using an information-theoretic approach. The disclosure degree corresponds to the amount of information stored in a user profile, also known as entropy. Generally speaking, the larger the amount of information in a user profile, the higher the disclosure degree of the user profile. If the disclosure degree of a user profile is low, then the user is not easily distinguishable from other profiles. It is to be noted that the proposed notion of disclosure degree is a privacy measure of a user profile, unlike k-anonymity and differential privacy, which are privacy measures of a dataset and an algorithm, respectively. Like commonality, the disclosure degree of a user profile depends on other profiles. The fact that Alice is the only one to click on the esoteric movie is what makes her disclosure degree high. Furthermore, a low disclosure degree conveys a protection against possible attacks of curious users, but not against a recommender, which is trusted. Disclosure risk of a click is then captured, and hence its privacy effect, as the difference (according to the example below) between the disclosure degree of a user profile before and after the click. Interestingly, it will be proven that after the click of a user $u$ on an item $i$, the disclosure degree of $u$ is never increased by the clicks of other users on $i$.

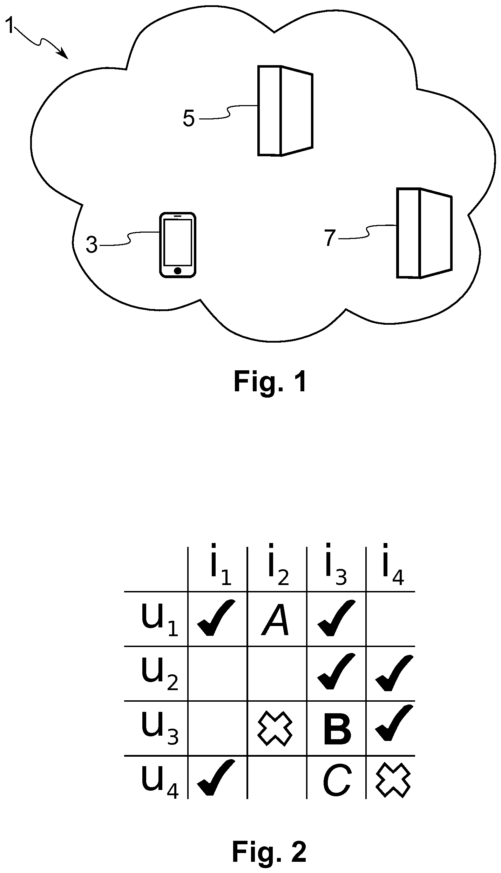

Before explaining the proposed method in detail, the environment, where the teachings of the present invention can be applied, is first briefly explained. Figure 1 schematically illustrates a simplified communication network or system 1 showing elements which are useful for understanding the teachings of the present invention. The communication system 1 in this example is the internet, which is a global system of interconnected computer networks that use the internet protocol suite to link devices worldwide. The internet can in fact be considered a network of networks that consists of private, public, academic, business, and/or government networks of local to global scope, linked by a broad array of electronic, wireless, and optical networking technologies. The communication system 1 comprises an end user device 3, which is a first data processing device or unit, such as a smart phone, tablet, laptop or desktop computer. The end user device 3 is equipped with a web browsing application. The communication system 1 further comprises a second data processing device or unit 5, referred to as a central processing unit, which in the described embodiment is configured to carry out the method described below. The system also comprises a third data processing device or unit 7, referred to as a recommender device or simply a recommender, as explained below in more detail. In this example, the central processing unit 5 and the third data processing unit 7 are physically separate devices.

To illustrate the proposed notions of utility and privacy effects of the clicks beyond Alice's example above, let us consider an example depicted in Figure 2 involving 4 items and 4 users. The items are associated with or linked to data or media content in the communication system 1. For example, an item (shown eg as a like icon or a dislike icon) can simply be a hyperlink linked to some data, such as a video or music file, in the communication system 1. The example of Figure 2 will be used throughout the text. A bold font refers to a like click on an item in the corresponding (user) row and (item) column, whereas an italic font refers to a dislike click on an item. The check marks and cross marks represent the like and dislike clicks, respectively, already performed by the users. The capital letters represent the following three clicks that could be made by the users:

- $A$ denotes a click by $u_1$ to dislike $i_2$. $A$ improves the recommender utility for $u_1$ because $A$ indicates that the preference of $u_1$ is close to that of $u_3$. Hence, the recommender can suggest relevant items for $u_1$ after $A$ (eg $i_4$). However, $A$ compromises the privacy for $u_1$ in the sense that $u_1$ becomes more distinguishable among other users after $A$. Indeed, the group of users who dislike $i_2$ *after A* ($u_1$ and $u_3$) is smaller than the group of users who did not click on $i_2$ before $A$ ($u_1$, $u_2$ and $u_4$). It can be concluded that $A$ induces a trade-off between utility and privacy.

- **B** denotes a click to like $i_3$ by $u_3$. **B** improves the privacy for $u_3$ in the sense that after this click, by knowing the preference of $u_3$ for $i_3$, $u_3$ becomes indistinguishable from a group of other users who liked $i_3$ (this group consists of two users out of the total of three users, other than $u_3$). Moreover, **B** helps the recommender find relevant items for $u_3$ because it can be concluded that $i_3$ is similar to $i_4$ (because $u_2$ and $u_3$ have both clicked on it) and possibly also to $i_1$ (because $u_1$ and $u_3$ have now both clicked on $i_3$), and user $u_3$ has not clicked on $i_1$ yet. The recommender can now propose $i_1$ to $u_3$. Hence, **B** improves both utility and privacy for $u_3$.

- $C$ is a click by $u_4$ to dislike $i_3$. This click neither improves privacy for $u_4$ nor helps the recommender suggest relevant items for $u_4$. Before $C$, the recommender could figure out that the preference of $u_4$ is close to $u_1$ (but not to $u_2$ nor $u_3$). However, $C$ indicates that the preference of $u_4$ towards $i_3$ is also opposite to $u_1$. Hence, C does not improve the recommender utility for $u_4$. What is even worse is that C compromises the privacy for $u_4$.

Clearly, this example contradicts the traditional belief of an inherent trade-off between utility and privacy, meaning that a user necessarily improves recommendation utility at the expense of compromising privacy (or vice versa). There are clicks that can improve utility without decreasing privacy and, at the other extreme, there are clicks that hamper privacy without improving utility.

Next the notion of utility is explained in more detail. It is to be noted that the notations given in Table 1 are used throughout the text.

Table 1: Notation table

| Notations | |
|---|---|
| *Items* | The set of all items in the system |
| *Users* | The set of all users in the system |
| $\varepsilon$ | A recommender dataset |
| $u$ | A user |
| $\mathcal{U}$ | A user profile |
| $i$ | An item |
| $\mathcal{I}$ | An item profile |
| $I$ | The set of all item profiles |
| $M$ | The number of items in the system |
| $N$ | The number of users in the system |
| $N_{Like}(i)$ | The number of users who like item $i$ |
| $N_{Dislike}(i)$ | The number of users who dislike item $i$ |

(continued)

| Notations | |
|---|---|
| $N_{NotClicked}(i)$ | The number of users who have not clicked on item $i$ |
| $Clicked(u)$ | The set of items clicked by user $u$ |
| $U$ | A randomly generated user profile based on the information in the item profiles |

In the example below, a general model of a CF recommender scheme is considered. The set of user clicks is modelled as a matrix, denoted by $\varepsilon$. The profile of a user $u$, denoted by $\mathcal{U}$ corresponds to a row of $\varepsilon$. Each column of $\varepsilon$ is related to an item. For the sake of presentation simplicity, but without loss of generality, each click is modelled as a like/dislike action. This can model binary as well as non-binary types of ratings: a low rating as a dislike, and a high rating as a like. The result of the user $u$ clicking on an item $i$ is either a "like" or a "dislike", represented by 1 and -1 in the corresponding cell of $\varepsilon$, $e(u; i)$. Also, cells are marked with 0 in $e(u; i)$ if the user $u$ has not clicked on the item $i$.

The size of the set of items is denoted by $M$, while the number of users is denoted by $N$. A user profile, $\mathcal{U} \in \{-1, 0, 1\}^M$ is a vector of size $M$, in which the cell corresponding to the item $i$ is $e(u; i)$. In essence:

$$e(u, i) = \begin{cases} 1 & u \text{ has clicked on } i \text{ and likes it;} \\ 0 & u \text{ has not clicked on } i; \\ -1 & u \text{ has clicked on } i \text{ and dislikes it.} \end{cases}$$

For each item $i$, $N_{Like}(i)$ and $N_{Dislike}(i)$ denote the number of users who like and dislike $i$, respectively. An *item profile* of $i$, denoted by $\mathcal{J}$, contains $N_{Like}(i)$, $N_{Dislike}(i)$ as well as the number of users who have not clicked on $i$ yet, $N_{NotClicked}(i)$. In other words, the item profile $\mathcal{J}$ includes the average rating of $i$ as well as the number of users who like/dislike $i$. Although user profiles are private, item profiles are typically public. Item profiles (the average rating, the percentages of users who have used/purchased an item etc) play an important role in convincing a user to actually purchase an item.

To define the proposed notion of commonality of a user profile, the concepts of popularity and preferability of items are explained first.

Definition 1. (Popularity)

$$popularity(i) = \frac{N_{Like}(i) + N_{Dislike}(i)}{N}.$$

Definition 2. (Preferability, ie average of preferences of users towards an item)

$$preferability(i) = \frac{N_{Like}(i) - N_{Dislike}(i)}{N}.$$

The item profiles as well as popularity and preferability of the items in Figure 2 are shown in Table 2.

Table 2: Item profiles, popularity and preferability of the items in Figure 2.

| Item | Item profile | | | Popularity | Preferability |
|---|---|---|---|---|---|
| | $N_{Like}$ | $N_{Dislike}$ | $N_{NotClicked}$ | | |
| $i_1$ | 2 | 0 | 2 | 0.5 | 0.5 |

(continued)

| Item | Item profile | | | Popularity | Preferability |
|---|---|---|---|---|---|
| | $N_{Like}$ | $N_{Dislike}$ | $N_{NotClicked}$ | | |
| $i_2$ | 0 | 1 | 3 | 0.25 | -0.25 |
| $i_3$ | 2 | 0 | 2 | 0.5 | 0.5 |
| $i_4$ | 2 | 1 | 1 | 0.75 | 0.25 |

Definition 3. (Mainstream preference)

The mainstream preference of users for $i$, denoted by $m(i)$, is in this example computed as *popularity*($i$) $\times$ *preferability*($i$), also referred to as an item weighting factor or simply weight. For all items managed by a recommender, the mainstream preference of users is stored in a vector of size $M$ in which the corresponding cell to $i$ is $m(i)$. The mainstream vector is here denoted by $m \in [-1,1]^M$.

The concept of commonality of $u$ (with respect to other users) denoted by *commonality*($u$) is introduced next. In essence, it is captured by a number, how close the user profile $\mathcal{U}$ is to other user profiles in the system in general.

Definition 4. (Commonality)

$$commonality(u) = \sum_{i \in I} popularity(i) \times preferability(i) \times e(u, i).$$

Remark 1. $commonality(u) = \mathcal{U} \times m^T$

Remark 2. Fundamentally, the commonality of a user represents how close the direction of the vector $\mathcal{U}$ is to the direction of the mainstream vector $m$ by relatively computing the cosine of the angle between the vector $\mathcal{U}$ and vector $m$.

Remark 3. It is important to notice that the commonality of a user is a measure of the quality of the recommender for that user, ie a measure of its ability to provide the user with appropriate items. Two users with very different preferences could have the same commonality.

The commonalities of the users in Figure 2 are given in Table 3 using Table 2 and Definition 4. As all the users clicked on exactly two items in Figure 2 (without considering the newest clicks), Table 3 shows that commonality is not proportional to the number of user clicks. Instead, the commonality is a weighted function of user clicks based on how well the clicks help the recommender connect users (or items) to suggest them new items. For instance, the commonality of $u_1$ is higher than the commonality of $u_4$. Thus, the recommender should provide more accurate recommendations for $u_1$ than for $u_4$. It is to be noted that the commonality captures the quality of not only singular value decomposition (SVD) based recommenders but also K-nearest neighbours (KNN) based ones. The commonality of a user profile can be further specified for a CF recommender based on a factorisation method with latent factors.

Table 3: Commonalities of users in Figure 2.

| | $i_1$ | $i_2$ | $i_3$ | $i_4$ | Commonality |
|---|---|---|---|---|---|
| $u_1$ | ✓ | | ✓ | | 0.5×0.5 + 0 + 0.5×0.5 + 0 = 0.5 |
| $u_2$ | | | ✓ | ✓ | 0 + 0 + 0.5×0.5 + 0.75×0.25 = 0.4375 |
| $u_3$ | | × | | ✓ | 0 - 0.25×(-0.25) + 0 + 0.75×0.25 = 0.25 |
| $u_4$ | ✓ | | | × | 0.5×0.5 + 0 + 0 - 0.75×0.25 = 0.0625 |

Algorithm 1 uses Remark 1 to compute the commonality of a user profile using a linear number of items.

Algorithm 1 recomputes and updates $m[i]$ in a constant time (at the time of a click on $i$). Algorithm 2 updates the commonalities of users after each click in linear time in the number of users and returns the commonality of a user profile in a constant time. Depending on which operations should be carried out rapidly (in a constant time), either Algorithm 1 or Algorithm 2 is run.

| Algorithm 1: Computations of commonality in O(M) and utility updates after a click in O(1) |
|---|
| procedure GET_COMMONALITY |
|     *commonality* ← 0. |
|     for $i$ : *Items* do |
|         if $u$ likes $i$ then |
|             *commonality* ← *commonality* + $m[i]$. |
|         else |
|         if $u$ dislikes $i$ then |
|             *commonality* ← *commonality* - $m[i]$. |
|     return *commonality*; |
| procedure UTILITY_UPDATE_CLICK |
|     $m[i]$ ← $m[i]$ + $\Delta m[i]$. |

| Algorithm 2: Computations of commonality in O(1) and utility updates after a click in O(N) |
|---|
| procedure GET_COMMONALITY return *commonality*[$u$]; |
| procedure UTILITY_UPDATE_CLICK |
|     for $u$ : *Users* do |
|         if $u$ likes $i$ then |
|             *commonality*[$u$] ← *commonality*[$u$] + $\Delta m[i]$. |
|         else |
|         if $u$ dislikes $i$ then |
|             *commonality*[$u$] ← *commonality*[$u$] - $m[i]$. |
|     $m[i]$ ← $m[i]$ + $\Delta m[i]$, |

The utility of a click by the user $u$ is defined in this example as the difference between *commonality*($u$) before and after the click. To distinguish both cases, a prime notation is used for the latter: *commonality'*($u$) denotes the commonality of $u$ after the click.

Definition 5. (Utility of a click by the user $u$)

$$\Delta commonality(u) = commonality'(u) - commonality(u).$$

Clearly, the clicks of a user affect not only the commonality of that user but also those of other users. Theorem 1 determines lower and upper bounds on the change of *commonality*($u$) ($\Delta$commonality($u$)) caused by any click by another user in the system (assuming $u$ does not know which item is clicked by which user). In Theorem 1, the notions of $M_{Like}$ and $M_{Dislike}$ are defined as follows. For any item $i$:

$$M_{Like}(i) = \frac{2N_{Like}(i)+1}{N^2},$$

$$M_{Dislike}(i) = \frac{2N_{Dislike}(i)+1}{N^2}.$$

Theorem 1. When *u* clicks on *i*:

$$\Delta commonality(u) = popularity(i) \times preferability(i) \times e(u, i).$$

For the clicks of other users,

$$-1 \times \max_{j \in Clicked(u)} \{M_{Dislike}(j)\} \leq e(u, i) \times \Delta commonality(u) \leq \max_{j \in Clicked(u)} \{M_{Like}(j)\}.$$

The privacy effect of a click is explained next. The notion of a disclosure degree of a user profile $\mathcal{U}$ denoted by $\delta_u$ is defined based on the classical concept of entropy in information theory. Essentially, the disclosure degree of the user *u* corresponds to the amount of information that item profile contains about *u*. Users without any click are excluded from this study because those users have no privacy concern. The goal is here to protect users from other (curious) users. It is assumed that the recommender, which stores all user and item profiles, is trusted.

A situation is addressed where an intruder (ie a curious user), given public item profiles *I*, tries to disclose information about user profiles. The privacy disclosure considered conveys the intruder's ability to uniquely identify a user. One could accordingly interpret the disclosure degree of *u* as the number of bits of information that the intruder has gained to uniquely identify *u,* given public information *PI = I*.

The disclosure degree depends on the probabilities that users have clicked on items. These probabilities are assigned by the intruder to distinguish a random user profile *U*. Let *U* have the conditional disclosure probability function $Q(U) = Pr(U = \mathcal{U}|PI = I)$ in which $\mathcal{U}$ represents each possible user profile in the system, ie it is the user profile of interest. For a given disclosure probability distribution, the concept of disclosure degree provides a measure of the information (entropy in information theory) about the user profile $\mathcal{U}$ stored in *I*. In this case, the entropy of the user profile given the public item profiles is denoted as $\delta_u = H(\mathcal{U})$, also called the disclosure degree.

Naturally, the lower $Q(U) = Pr(U = \mathcal{U}|PI = I)$, the more unique the user profile $\mathcal{U}$ would be (the higher $\delta_u$). When the interests of *u* are determined by a user click on an item, most of the time, this click decreases $Pr(U = \mathcal{U}|PI = I)$ and compromises the privacy of the user. In other words, after a click, the user usually provides more information to the system and makes it hard for the recommender to hide this information (it will be shown however that this is not always the case).

To compute the disclosure degree of a user profile, the probability of a click on an item *i* in *U* is computed as follows:

$$E_i = \begin{cases} 1 & \text{with probability } \dfrac{N_{Like}(i)}{N} \ (U \text{ likes } i); \\ 0 & \text{with probability } 1 - \dfrac{N_{Like}(i) + N_{Dislike}(i)}{N} \ (U \text{ does not click on } i); \\ -1 & \text{with probability } \dfrac{N_{Dislike}(i)}{N} \ (U \text{ dislikes } i). \end{cases}$$

The following remark highlights the distribution of the proposed disclosure probabilistic model for each possible user profile given public item profiles.

Remark 4. For any possible user profile $\mathcal{U}$ :

$$Q(U) = Pr(U = \mathcal{U}|PI = I) = \prod_{i \in Items} Pr(E_i = e(u, i)).$$

The above disclosure model is used to define $\delta_u$, the disclosure degree of *u*:

Definition 6. (Disclosure degree)

$$\delta_u = -\log Pr(U = \mathcal{U}|PI = I).$$

It is to be noted that $\delta_u$ captures the amount of information about a user profile stored in the public item profiles.

The following remark highlights how to precisely compute $\delta_u$ in this example. Later, Remark 5 is used to compute the privacy effect of a click on an item by *u*.

Remark 5.

$$\delta_u = -\log Pr(U = \mathcal{U}|PI = I) = -\sum_{i \in Items} \log(Pr(E_i = e(u,i))).$$

The disclosure degrees of the users in Figure 2 are given in Table 4 using Definition 6. The commonality and disclosure degree of each user are shown in the corresponding columns in Table 4. Even though $u_4$ has a higher disclosure degree than $u_2$, the recommender can provide better recommendations for $u_2$ than for $u_4$ because the commonality of $u_2$ is higher than that of $u_4$. This shows that a higher disclosure degree does not necessarily lead to a better utility. Actually, not only does the click of $u_4$ on $i_4$ compromise $u_4$'s privacy but neither does it help get good recommendations.

Table 4: Disclosure degrees of the users in Figure 2.

| User | Commonality | Disclosure degree |
|------|-------------|-------------------|
| $u_1$ | 0.5 | -log(0.50×0.75×0.50×0.25) = 1.329 |
| $u_2$ | 0.4375 | -log(0.50×0.75×0.50×0.50) = 1.028 |
| $u_3$ | 0.25 | -log(0.50×0.25×0.50×0.50) = 1.505 |
| $u_4$ | 0.0625 | -log(0.50×0.75×0.50×0.25) = 1.329 |

Algorithm 3 computes the disclosure degree of a user profile using Remark 5, linearly in the number of items. At the time of a click on *i*, Algorithm 3 only updates $Pr(E_i = 1)$, $Pr(E_i = 0)$ and $Pr(E_i = -1)$ in a constant time. Algorithm 4 updates the disclosure degrees of users after each click linearly in the number of users and gives the updated value of disclosure degree of a user profile in a constant time.

---

Algorithm 3: Computations of disclosure degree in O(M) and privacy updates after a click in O(1)

---

procedure GET_DISCLOSURE_DEGREE(U)
    $\delta[u] \leftarrow 0$.
    for *i* : *Items* do
        if *u* likes *i* then
            $\delta[u] \leftarrow \delta[u] - \log(Pr(E_i = 1))$.
        else
            if *u* dislikes *i* then
                $\delta[u] \leftarrow \delta[u] - \log(Pr(Ei = -1))$.
            else
                $\delta[u] \leftarrow \delta[u] - \log(Pr(E_i = 0))$
    return $\delta[u]$;
procedure PRIVACY_UPDATE_CLICK(I)
    $Pr(E_i = 1) \leftarrow Pr(E_i = 1) + \Delta Pr(E_i = 1)$.
    $Pr(E_i = -1) \leftarrow Pr(E_i = -1) + \Delta Pr(E_i = -1)$.
    $Pr(E_i = 0) \leftarrow Pr(E_i = 0) + \Delta Pr(E_i = 0)$.

---

---

Algorithm 4: Computations of disclosure degree in O(1) and privacy updates after a click in O(N)

---

procedure GET_DISCLOSURE_DEGREE(U) return $\delta[u]$;
procedure PRIVACY_UPDATE_CLICK(I)

---

(continued)

| Algorithm 4: Computations of disclosure degree in O(1) and privacy updates after a click in O(N) |
|---|
| for $u$ : *Users* do |
|     if $u$ likes $i$ then |
|         $\delta[u] \leftarrow \delta[u] - \log(Pr(E_i = 1))$. |
|     else |
|         if $u$ dislikes $i$ then |
|             $\delta[u] \leftarrow \delta[u] - \Delta log(Pr(E_i = -1))$. |
|     else |
|         $\delta[u] \leftarrow \delta[u] - log(Pr(E_i = 0))$. |
| $Pr(E_i = 1) \leftarrow Pr(E_i = 1) + \Delta Pr(E_i = 1)$. |
| $Pr(E_i = -1) \leftarrow Pr(E_i = -1) + \Delta Pr(E_i = -1)$. |
| $Pr(E_i = 0) \leftarrow Pr(E_i = 0) + \Delta Pr(E_i = 0)$. |

In the following, the disclosure risk of a user click by computing the change of $\delta_u$ before and after the click is computed. The effect of a click on privacy is determined for the user $u$. In this example, the difference of the disclosure degree of $u$ before and after the click is denoted by $\Delta\delta_u$ which can be expressed as the disclosure risk of the click.

Definition 7. (Disclosure risk of a click by $u$)

$$\Delta\delta u = \delta'_u - \delta_u.$$

It is to be noted that a click with a positive disclosure risk compromises the privacy for a user, whereas a click with a negative disclosure risk improves the privacy for that user. The larger the absolute value of the disclosure risk of a click, the greater the privacy effect of that click. The following theorem gives the exact $\Delta\delta_u$ for the clicks of $u$ as well as the upper and lower bounds of it for the clicks of other users:

Theorem 2. When $u$ clicks on $i$:

$$\Delta\delta_u = \begin{cases} \log \dfrac{N_{NotClicked}(i)}{N_{Like}(i) + 1} & if \ e'(u,i) = 1; \\ \log \dfrac{N_{NotClicked}(i)}{N_{Dislike}(i) + 1} & if \ e'(u,i) = -1. \end{cases}$$

$$Min_{Like} = min_{\{\forall j : e(u,j)=1\}} \log\left(1 - \frac{1}{N_{Like}(j) + 1}\right),$$

$$Min_{Dislike} = min_{\{\forall j : e(u,j)=1\}} \log\left(1 - \frac{1}{N_{Dislike}(j) + 1}\right).$$

For any single click of other users:

$$min\{Min_{Like}, Min_{Dislike}\} \le$$

$$\Delta\delta_u \le max_{j \notin Clicked(u)} \log\left(1 + \frac{1}{N(1-popularity'(j))}\right).$$

The following remarks can then be easily derived:

Remark 6. The clicks of other users on the items on which *u* has not clicked yet increase the disclosure degree of *u* (compromising the privacy for *u*).

Remark 7. The clicks of other users who have the same preference as *u* decrease the disclosure degree of *u*. Hence, these clicks improve the privacy for *u.*

Remark 8. The clicks of other users having the opposite preference as *u* do not change the disclosure degree of *u*.

Remark 9. Whenever *u* clicks on *i,* the clicks of other users on *i* either decrease the disclosure degree of *u* or do not change it at all.

Remark 9 fundamentally says that the disclosure risk of a click on *i* by *u* is an upper bound of all changes in the disclosure degree of *u* corresponding to the item *i* after the time of the click. In other words, when *u* clicks on *i*, the disclosure degree of *u* does not increase over time by clicks of other users on *i*.

The present invention also proposes an optional click advisor, a virtual platform enabling users to decide whether or not to actually click on an item, as explained next in more detail. In traditional recommenders, when a user clicks on an item, the information about that click is directly propagated to the system (sent to the recommender). The present invention proposes to leverage the utility and privacy metrics to build a user-aware clicking tool: the click advisor. After getting a new recommendation, a user pre-clicks on the item and previews the utility and/or privacy effects of the pre-click through the click advisor. Based on the click advisor feedback on a pre-click, the user finalises the decision on whether or not to click. In other words, the process behind the click advisor is as follows: a user (a) pre-clicks on an item, (b) gets a quick feedback on the utility and/or privacy effects of that pre-click and then (c) decides to confirm, cancel, or even change the pre-click. It would however also be possible to make a final click first and only then consult the click advisor if this is preferred.

The utility and disclosure risk of a click of *u* can be positive or negative. In this example, the clicks are categorised into four different classes or zones depending on the sign of the utility and privacy effects of the click as well as its reverse (the reverse of a like click is a dislike click and the reverse of a dislike click is a like click):

- Safe zone: this zone improves both utility and privacy.

- Trade-off zone: this zone induces a trade-off between utility and privacy.

- Dangerous zone: this zone compromises both utility and privacy but the reverse of the click improves privacy. It is to be noted that the reverse of the click always compromises the utility for the user as it is not based on the real preferences of that user.

- Deleterious zone: Both the click and its reverse compromise utility as well as privacy.

Table 5 describes the corresponding zones for all possible cases for the disclosure risk and utility of a click. It is to be noted that there are two cases in which the clicks induce a trade-off: clicks with positive utility and positive disclosure risk, as well as clicks with negative utility and negative disclosure risk. To distinguish deleterious and dangerous zones for a click, the disclosure risk of the reverse of the click is computed, $\Delta\delta^*(u)$. If $\Delta\delta^*(u) > 0$, the click is in a deleterious zone, otherwise, it is in a dangerous zone.

Table 5: Commonality and disclosure degree conditions for the click zones.

|  | $\Delta commonality(u) > 0$ | $\Delta commonality(u) < 0$ |
|---|---|---|
| $\Delta\delta_u > 0$ | Trade-off | Dangerous/Deleterious |
| $\Delta\delta_u < 0$ | Safe | Trade-off |

Table 6 shows the utility effect ($\Delta commonality$) and privacy effect ($\Delta\delta$) of each of the following clicks. The zone of a click is determined by the sign of the utility and disclosure risk of that click as described in Table 5:

- $D_2^1$ (the dislike click on $i_2$ by $u_1$): has a positive disclosure risk but the utility of $D_2^1$ is positive. Hence, $D_2^1$ is in the trade-off zone.

- $L_2^2$ (the like click on $i_2$ by $u_2$): has a negative effect on the recommender utility for $u_2$. Moreover, not only $L_2^2$ has a positive disclosure risk but the reverse of $L_2^2$ also does. Hence, changing $L_2^2$ does not improve the privacy for $u_2$. Thus $L_2^2$ is in the deleterious zone.

- $L_3^3$ (the like click on $i_3$ by $u_3$): has a positive utility and a negative disclosure risk. $L_3^3$ thus improves both utility and privacy for $u_3$ and is thus a safe click.

- $D_3^4$ (the dislike click on $i_3$ by $u_4$): compromises both utility and privacy for $u_4$. $D_3^4$ is an unsafe click for $u_4$. However, considering the reverse of $D_3^4$, even though changing $D_3^4$ decreases the recommender utility for $u_4$, the reverse of $D_3^4$ improves the privacy for $u_4$ ($\Delta\delta^*$), as shown in Table 6. That makes $D_3^4$ a dangerous click, so $u_4$ may prefer to change this click.

Table 6: The utility and privacy effect of the clicks.

|  | $i_1$ | $i_2$ | $i_3$ | $i_4$ | Click | $\Delta commonality$ | $\Delta\delta$ | $\Delta\delta^*$ |
|---|---|---|---|---|---|---|---|---|
| $u_1$ | ✓ | ○ | ✓ |  | $D_2^1$ | 0.25 | 0.176 | 0.477 |
| $u_2$ |  | ○ | ✓ | ✓ | $L_2^2$ | 0 | 0.477 | 0.176 |
| $u_3$ |  | × | ○ | ✓ | $L_3^3$ | 0.5625 | -0.176 | 0.301 |
| $u_4$ | ✓ |  | ○ | × | $D_3^4$ | -0.1875 | 0.301 | -0.176 |

Theorem 3 below determines the exact signs of $\Delta\delta_u$, $\Delta\delta_u^*$ and $\Delta commonality(u)$. The click advisor represents the click zones and all the pre-clicks belonging to each zone at any point in time using the following theorem and Table 5.

Theorem 3. When $u$ clicks on $i$, the sign of the changes in $commonality(u)$ and $\delta_u$ can be calculated as follows:

$$(i)\ e(u, i') = 1:$$

$$sgn(\Delta\delta_u) = sgn(N - 2N_{Like}(i) - N_{Dislike}(i)),$$

$$sgn(\Delta commonality(u)) = sgn(N_{Like}(i) - N_{Dislike}(i)),$$

$$sgn(\Delta\delta_u^*) = sgn(N - N_{Like}(i) - 2N_{Dislike}(i)).$$

$$(ii)\ e(u, i') = -1:$$

$$sgn(\Delta\delta_u) = sgn(N - N_{Like}(i) - 2N_{Dislike}(i)),$$

$$sgn(\Delta commonality(u)) = sgn(N_{Dislike}(i) - N_{Like}(i)),$$

$$sgn(\Delta\delta_u^*) \; = \; sgn(N - \; 2N_{Like}(i) - \; N_{Dislike}(i)).$$

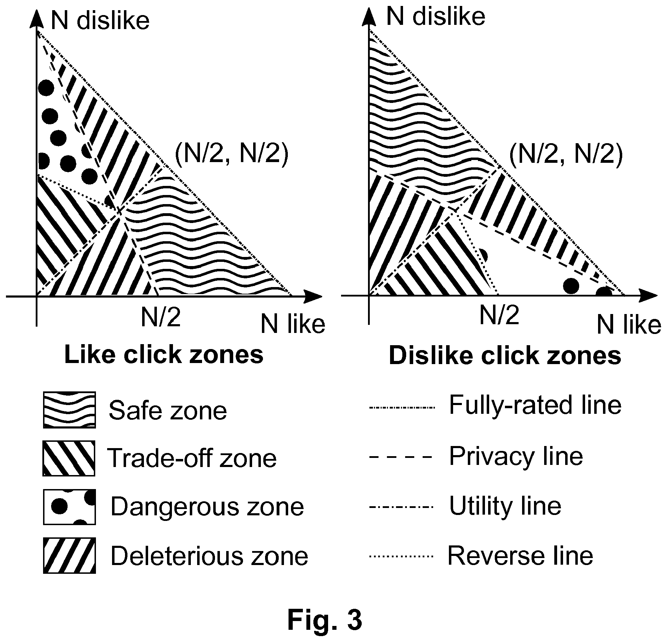

Theorem 3 helps to define the zones in the click advisor. In Figure 3, a pre-click is represented as a point in one of the like or dislike click zones based on the privacy and utility effects of a click and its reverse as explained before. To describe how to depict the zones in the click advisor, the two different cases of a like click and a dislike click by $u$ are first explained separately. Then, they are combined to identify the zones in the click advisor. In the following, the like click zones as well as the dislike click zones in Figure 3 are explained.

Like click (of $u$): The condition for the sign of $\Delta\delta_u$ is linear for $N_{Like}(i)$ and $N_{Dislike}(i)$. The line corresponding to $N-2N_{Like}(i)-N_{Dislike}(i) = 0$ is called a privacy line. Also, the sign of $\Delta commonality(u)$ is derived from a linear equation for $N_{Like}(i)$ and $N_{Dislike}(i)$ which is called a utility line. A line with equation $N - N_{Like}(i) - 2N_{Dislike}(i)$, denoted as a reverse line, separates the dangerous and deleterious zones. A click is in the dangerous zone if the click compromises both privacy and utility while the reverse of the click (disliking the item, in this case) improves privacy. A fully-rated line corresponds to the items which have been already clicked by all the users ($N_{Like}(i) + N_{Dislike}(i) = N$), so none of the pre-clicks can be on this line. For the same reason, clicks cannot go beyond the fully-rated line. Figure 3 shows the like click zones as well as the privacy and utility lines in general. A like of the item $i$ is represented as the point ($N_{Like}(i)$, $N_{Dislike}(i)$) in the click advisor. It is to be noted that each point can be related to more than one click. According to the point related to a click, the zone of the click is determined. This zone shows the privacy and utility effects of the click for the user.

Dislike click (of $u$): Similarly, Figure 3 highlights click zones in case of a dislike. The representation of a dislike click is the same as in the case of a like. It is to be noted that the zone of a like click and that of a dislike click for the same item may be different. Furthermore, the signs of the disclosure risk and utility of a click can be derived from the zone of the click in Figure 3.

Remark 10. In the like and dislike click zones, the clicks below the utility (resp. privacy) line hamper utility (resp. privacy), while the clicks above the utility (resp. privacy) line improve utility (resp. privacy).

Remark 11. The reverse of the clicks above the reverse line improves privacy while the reverse of the clicks below this line compromise privacy.

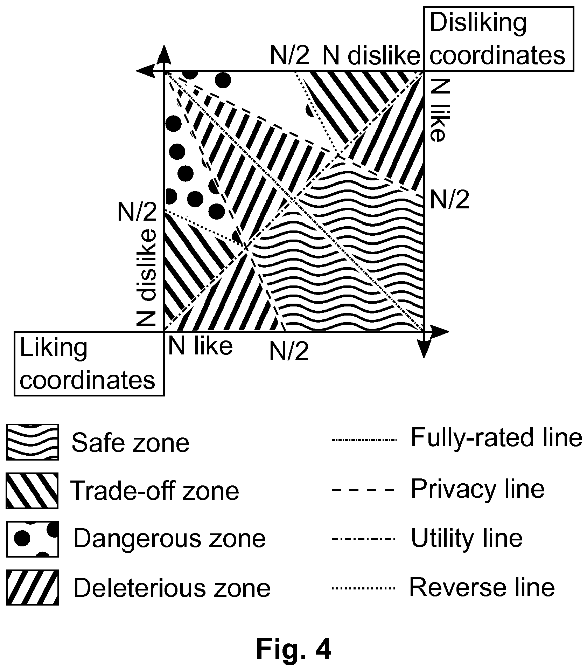

The full or complete click advisor gathers all the clicks and thus contains both the like and dislike parts. To combine these two parts, the diagram of dislike click zones is in this example rotated by 180° and inserted next to the like click zones. It is to be noted that for each part, the corresponding coordinates are used. Figure 4 shows the click zones in the click advisor in general. It is to be noted that the click advisor for a user at any point in time represents the zone as well as the points corresponding to all pre-clicks for the user. For example, the point corresponding to a click on the item $i$ in order to like it is the point ($N_{Like}(i)$, $N_{Dislike}(i)$) in the like part of the click advisor, using liking coordinates.

Furthermore, the place of a pre-click in the click advisor represents the amount of disclosure risk and utility of that pre-click and can be computed in O(1) as shown in Algorithm 5. At the time of a click on $i$, Algorithm 5 only computes and updates $m[i]$, $Pr(E_i = 1)$, $Pr(E_i = 0)$ and $Pr(E_i = -1)$ in a constant time to be employed by the click advisor. Also, Algorithm 5 computes the commonality (using Remark 1) and the disclosure degree (using Remark 5) of a user profile, linearly in the number of items.

---

Algorithm 5: Computations of commonality in O(M) and disclosure degree in O(M) and computation of the utility and privacy effects and updates after a click in O(1)

---

```
procedure GET_COMMONALITY
    commonality ← 0.
    δ[u] ← 0.
    for i : Items do
        if u likes i then
            commonality ← commonality, + m[i].
            δ[u] ← δ[u] - log(Pr(Eᵢ = 1)).
        else
            if u dislikes i then
                commonality ← commonality - m[i].
```
---
```
                δ[u] ← δ[u] - log(Pr(Eᵢ = -1)).
            else
                δ[u] ← δ[u] - log(Pr(Eᵢ = 0)).
    return (commonality, δ[u]);
procedure UTILITY_UPDATE_CLICK
```
---

(continued)

| Algorithm 5: Computations of commonality in O(M) and disclosure degree in O(M) and computation of the utility and privacy effects and updates after a click in O(1) |
| --- |
| $m[i] \leftarrow m[i] + \Delta m[i]$, <br> $\forall r \in \{-1,0,1\} : Pr(E_i = r) \leftarrow Pr(E_i = r) + \Delta Pr(E_i = r)$. <br> = 0 |

The click advisor solely uses the public item information to locate the pre-clicks of users. Hence, the click advisor can be implemented at the user end to inform users about the utility and privacy effects of their pre-clicks without introducing any new privacy risks for the users. It is important to note here that the click advisor is not a privacy-preserving platform, but rather a visually informative one.

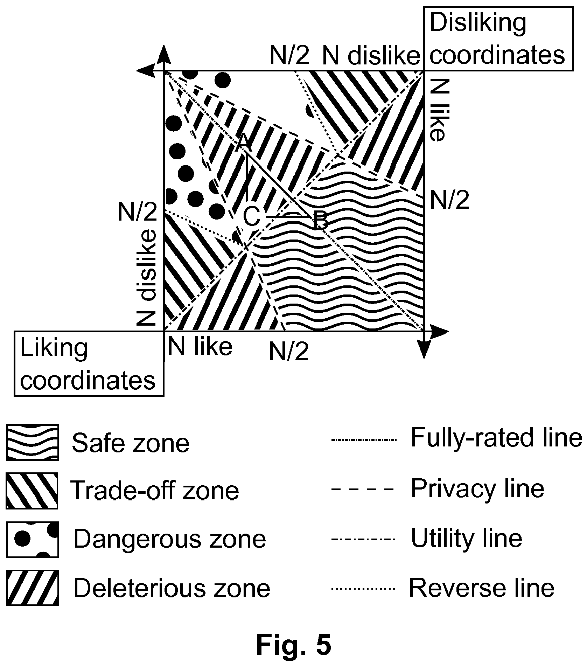

The zone of a pre-click by a user may change after adding new clicks of other users. For example, safe pre-clicks never end up being in a dangerous or deleterious zone. In general, it is possible to precisely compute the area of all possible zones that a pre-click can end up being after adding new clicks. In the click advisor of the example of Figure 5, this area is a right-angled triangle whose one of the vertices is the current place of the pre-click and the other two vertices are on the fully-rated line. For instance, Figure 5 represents the position of the pre-click C in the click advisor. A triangle ABC shows the area where the pre-click C can end up being if new clicks are added by any users. As the triangle ABC only shares some parts with the trade-off and the safe zones, the pre-click C would never end up being dangerous or deleterious. It can be determined if the zone of a pre-click is stable or not. A pre-click is in a stable trade-off zone if the clicks of other users cannot move this pre-click into the dangerous or deleterious zone. For example, as explained, the pre-click C in Figure 5 is in the stable trade-off zone. A wise clicking strategy would be then to confirm a pre-click only when it is in the safe or stable trade-off zone.

It is to be noted that, the above described click advisor is merely one example implementation, but there are other alternative ways to implement it. For example, the click advisor could show the different zones explained above by showing an icon associated with the item to be clicked with different colours depending on the effect of the click. For example, a green icon could represent the safe zone, a black colour could represent the deleterious zone etc. Furthermore, the icon could have a different form or shape depending on the effect of the click. For example, a smiley face (ie the icon associated with the item to be clicked) could be shown for the safe zone, a scary face for the deleterious zone etc. Also, a voice message could be played informing the user about the effects of the click.

Different user clicking strategies are investigated next. To analyse the behaviour of the users, the act of clicking is modelled as a game, which is called a clicking game. The players of this game are the users of the system (which provides recommendations as well as the click advisor) who want to maximise a pay-off function $\phi : Users \rightarrow \mathcal{R}$ for each click as described in the following ($\mathcal{R}$ being a real number).

Without loss of generality, it is assumed that $\forall u \in Users, \phi(u) = 0$ at the beginning. A click by the user $u$ with utility and privacy effects $\alpha = \Delta commonality(u)$ and $\beta = -\Delta \delta_u$ modifies $\phi(u)$ as follows:

$$\phi(u) \leftarrow \phi(u) + f(\alpha, \beta),$$

where function $f : \mathcal{R}^2 \rightarrow \mathcal{R}$ has the following properties:

    1. $f$ is an increasing function over $\alpha$.
    2. $f$ has the single crossing property over $max(\alpha, \beta)$.

Property 1 of $f$ means that the higher the recommender utility for a user, the greater the pay-off function for that user. The single crossing property (defined in [2]) merely defines the sign of the function $f$. More precisely, Property 2 means that if $max(\alpha, \beta) >$ (resp. <)0, $f(\alpha,\beta) >$ (resp. <)0. And, $f(\alpha,\beta) = 0$ if $max(\alpha,\beta) = 0$. Property 2 implies the following naturally desired sub-properties for $\phi(u)$:

    2a. If $u$ cancels a click, $\phi(u)$ remains the same.
    2b. Compromising utility and privacy by a click of $u$ leads to decreasing $\phi(u)$ (because of a negative $f(\alpha,\beta)$).

Upon getting a new recommendation, a user pre-clicks on the item and consults the click advisor for the effects of that pre-click. Then, the user chooses the desired action on the pre-click to maximise the reward in the pay-off function through the clicking game.

In this example, there are *N* users playing the clicking game. If a pre-click of a user is in the safe or trade-off zone, either the privacy and/or utility of that user improves after confirming that pre-click. However, confirming a pre-click in the dangerous or deleterious zone compromises both utility and privacy. Hence, the user may decide to change or cancel a deleterious or dangerous pre-click. In essence, three possible user actions can be considered:

- Confirm: When the click follows the initial preference of the user (ie the user confirms the pre-click), the utility and disclosure risk of the click are the same as what we computed in Theorems 1 and 2, respectively.

- Change (for better privacy): The user decides to change the pre-clicks (ie clicking to dislike an item instead of clicking to like it) to improve privacy. In this case, the disclosure risk of the click is the same as what is computed in Theorem 2. However, the utility of the click would change from what was measured in Theorem 1 because this click is not the real preference of the user, but the opposite to it. So, the utility of the click is the opposite of the utility computed in Theorem 1. It is to be noted that the utility of a recommender for users depends on the real preferences of users. Hence, the action of changing a pre-click by a user always decreases the recommender utility for that user.

- Cancel: In this case, the user decides not to click on an item to preserve privacy. By cancelling a pre-click on the item, a user preserves privacy (which is the opposite of what is calculated based on Theorem 2 assuming the pre-click was confirmed) at the expense of missing potential utility. With the same approach, the lost utility is what the user would get with the assumption (of confirming the pre-click) in Theorem 1.

It can be concluded that the first click on an item is always in a trade-off zone.

After being recommended a new item, a user considers one of the above actions to obtain the maximum possible pay-off over time. There are various possible user clicking strategies. Some of them are outlined below.

- Basic: A user always confirms the pre-click based on their preference. In this strategy, the click advisor is ignored.

- Careful: The user cancels a pre-click if it is in the dangerous or deleterious zone. Otherwise, the user confirms the pre-click.

- Smart: The user always confirms a pre-click in the safe or trade-off zone, cancels a deleterious pre-click and reverses a pre-click in the dangerous zone.

The following theorem states that the smart strategy leads to a Nash equilibrium.

Theorem 4. All users playing smart is a Nash equilibrium, ie playing the smart strategy maximizes the pay-off function $\phi(u)$ for the user u, if every user other than u plays smart.

It can be concluded that if all the users follow the smart strategy, the maximum possible privacy for all the users can be guaranteed. However, it can hamper the recommender utility for the users. Furthermore, the expected value of the average of the commonalities of the users in the case where they all play the smart strategy is the same as the case where all the users play the basic strategy (users click on items based on their real preferences). In other words, the overall average of the recommender utility for all the users playing the smart strategy is the same as in the case where the users click on items based on their real preferences. However, regarding privacy, the smart strategy provides better privacy compared to the basic strategy.

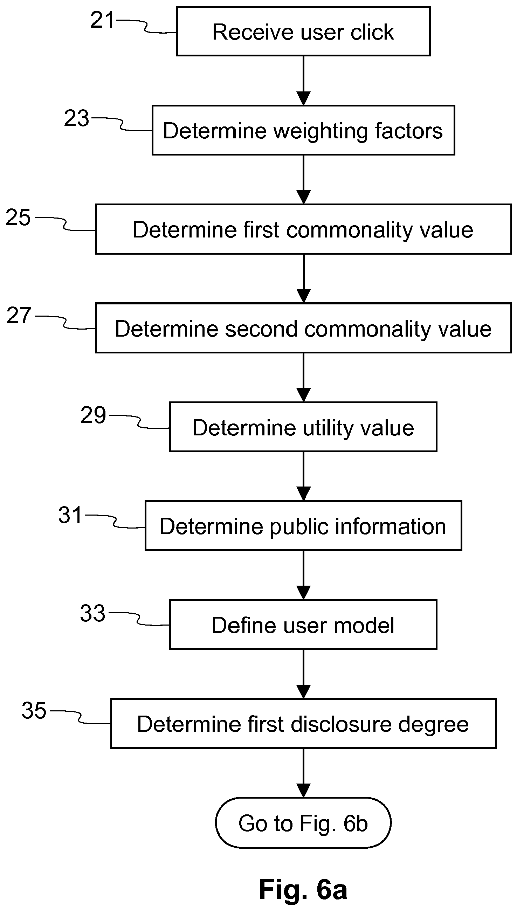

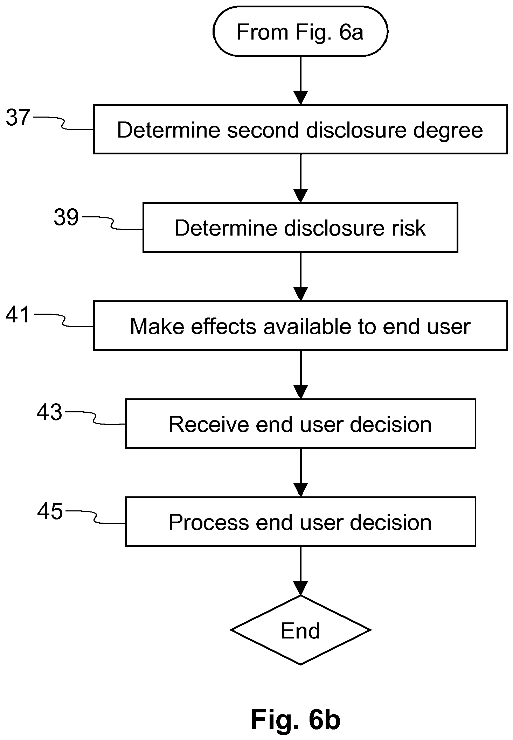

The above described method of determining an effect of a click can be summarised by the flow chart of Figures 6a and 6b. It is to be noted that some of the steps are optional. In step 21, an end user clicks or pre-clicks on an item displayed by their web browsing application. Next, the utility and privacy effects of the click are analysed. In this example, both the effects are analysed. In step 23, the central processing unit 5 determines a weighting factor for each item in a set of items. This step may include determining the popularity and preferability values as explained earlier. However, depending on the implementation, it may be possible to determine the weighting factors without determining the popularity and preferability values. In other words, there may be other ways to determine the weighting factors. In step 25, the central processing unit 5 derives a first commonality value for the end user. The first commonality value is derived from at least the weighting factors and item ratings given by the end user for the items in the set of items before the click. The first commonality value indicates how close the end user profile is to other user profiles in the communication system 1 before the click. In step 27, the central processing unit 5 derives a second commonality value for the end user. The second commonality value is derived from at least the weighting factors and item ratings given by the end user for the items in the set of items after the click. The second commonality value indicates how close the end user profile is to the other user profiles in the communication system 1 after the click. In step 29, the central processing unit 5 determines a utility value of the click. The utility value depends on the first and second commonality values, and in this example, the utility value is the difference between these two values.

The process of determining the optional utility effect of a click was summarised above. Next, the process of determining the privacy effect of the click is summarised. In step 31, the central processing unit 5 obtains public information in the communication system 1. The public information comprises at least portions of at least some of the user profiles in the communication system 1. For example, the public information may comprise the entire user profiles of a set of users. More specifically, the public information may comprise ratings (eg likes and dislikes) given by the set of users for the set of items. In step 33, the central processing unit 5 defines a probabilistic user model of an imaginary user. The probabilistic user model is at least partially derived from the public information. It is to be noted that the user model does not have to be the same for all the users, and it can thus be user-specific. In step 35, the central processing unit 5 determines a first disclosure degree for the end user. The first disclosure degree depends on the probabilistic user model. The first disclosure degree indicates information content amount of the end user profile before the click by the end user on the item in the set of items. In step 37, the central processing unit determines a second disclosure degree for the end user. Also the second disclosure degree depends on the probabilistic user model. The second disclosure degree indicates information content amount of the end user profile after the click by the end user on the item in the set of items. The first and second disclosure degrees depend on a probability that the probabilistic user model partially or completely equals the user profile of the end user. In step 39, the central processing unit determines a disclosure risk of the click by the end user on the item in the set of items. The disclosure risk depends on the first and second disclosure degrees, and in this example, the disclosure risk is the difference between these two values.

According to this example, no information has been forwarded to the recommender 7 yet. In step 41, the central processing unit 5 makes the effects of the click available to the end user. This can be done by using the click advisor for example. In step 43, the central processing unit 5 receives a decision from the user. In this step, the central processing unit also analyses the decision it received. In step 45, depending on the decision it received, it either transfers the unchanged click to the recommender 7 (the user confirmed the click), changes the click and then transfers the click as changed (the user decided to change the click, eg reversed it), or does not transfer any click to the recommender 7 (the user decision indicates that the user does not want to confirm the click). Thus, in this example, the central processing unit 5 acts as an interface unit between the end user and the recommender 7. However, in an alternative implementation, the user clicks are directly transferred to the recommender 7. In this scenario, most of the above method steps could be implemented by the recommender 7 and the click advisor would not be needed. It is further to be noted that instead of the end user cancelling or changing the click, the click may be cancelled or changed by the interface unit if this is determined to be beneficial.

While the invention has been illustrated and described in detail in the drawings and foregoing description, such illustration and description are to be considered illustrative or exemplary and not restrictive, the invention being not limited to the disclosed embodiment. Other embodiments and variants are understood, and can be achieved by those skilled in the art when carrying out the claimed invention, based on a study of the drawings, the disclosure and the appended claims. For example, the invention also relates to a computer program product comprising instructions for implementing the steps of the method when loaded and run on computing means of an electronic device, such as the central processing unit 5.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used.

**Claims**

1. A method of determining an effect of a user action taken with respect to an item in a communication network (1), the item being associated with data content in the communication network (1), users being assigned user profiles comprising users' item ratings in the communication network (1), the method comprising:

   • determining (31) public information in the communication network (1), the public information comprising at least portions of at least some of the user profiles in the communication network (1);
   • determining (33) a probabilistic user model of a first user, the probabilistic user model being at least partially derived from the public information;
   • determining (35) a first disclosure degree for a second user, the first disclosure degree depending on the probabilistic user model, the first disclosure degree indicating information content amount of a user profile of the second user before an action by the second user with respect to an item in the set of items;
   • determining (37) a second disclosure degree for the second user, the second disclosure degree depending on the probabilistic user model, the second disclosure degree indicating information content amount of the user profile of the second user after the action by the second user with respect to the item in the set of items; and

• determining (39) a disclosure risk of the action by the second user with respect to the item in the set of items, the disclosure risk depending on the first and second disclosure degrees, wherein the disclosure risk indicates a privacy effect of the action by the second user.

2. The method according to claim 1, wherein the public information comprises ratings given by user actions taken with respect to the items in the set of items.

3. The method according to any one of the preceding claims, wherein the disclosure risk is a difference between the second disclosure degree and the first disclosure degree.

4. The method according to any one of the preceding claims, wherein the probabilistic user model comprises rating probability values for the items in the set of items.

5. The method according to any one of the preceding claims, wherein the first and second disclosure degrees depend on a probability that the probabilistic user model at least partially equals the user profile of the second user.

6. The method according to claim 5, wherein first and second disclosure degrees $\text{equal} -\log(Pr(U = \mathcal{U}|PI))$, where $U$ is the probabilistic user model, $\mathcal{U}$ is the user profile of the first or second user, and $PI$ is the public information.

7. The method according to any one of the preceding claims, wherein the first user is not part of the set of users.

8. A method according to any one of the preceding claims, wherein the method further comprises:

  • determining (23) a weighting factor for each item in the set of items;
  • deriving (25) a first commonality value for the second user, the first commonality value being derived from at least the weighting factors and item ratings given by the second user for the items in the set of items before the action by the second user, the first commonality value indicating how close the user profile of the second user is to other user profiles in the communication network (1) before the action by the second user;
  • deriving (27) a second commonality value for the second user, the second commonality value being derived from at least the weighting factors and the item ratings given by the second user for the items in the set of items after the action by the second user, the second commonality value indicating how close the user profile of the second user is to the other user profiles in the communication network (1) after the action by the second user; and
  • determining (29) a utility value of the action by the second user, the utility value depending on the first and second commonality values.

9. The method according to claim 8, wherein determining the weighting factors comprises:

  • determining a popularity value for each item in the set of items, the popularity value indicating how often an item in the set of items has been selected by the users of the communication network (1);
  • determining a preferability value for each item in the set of items, the preferability value indicating how often the item in the set of items has been liked by the users of the communication network (1); and
  • multiplying the popularity value and the preferability value for a given item to obtain the weighting factor for the given item.

10. The method according to claim 8 or 9, wherein the utility value of the action by the second user depends on the first commonality value and the second commonality value.

11. The method according to any one claims 8 to 10, wherein the method further comprises determining a reward function depending on the disclosure risk and the utility value, and maximising the reward function to improve the privacy effect for the second user without decreasing an average utility value of actions taken by the users in the communication network (1).

12. The method according to any one of the preceding claims, wherein the method further comprises making (41) the disclosure risk and/or the utility value of the action by the second user available to the second user.

13. The method according to claim 12, wherein, in response to making (41) the disclosure risk and/or the utility value of the action available to the second user, the method further comprises receiving one of the following responses from the second user:

- a confirmation of the action by the second user;
- a change of the action by the second user to another action; and
- cancellation of the action by the second user.

14. The method according to claim 13, wherein the method further comprises sending (45) information of the action as selected by the second user to a data processing unit (7) in the communication network (1).

15. A data processing device (5) for determining an effect of a user action taken with respect to an item in a communication network (1), the item being associated with data content in the communication network (1), users being assigned user profiles indicating users' item ratings in the communication network (1), the data processing device (5) comprising means for:

- determining public information in the communication network (1), the public information comprising at least portions of at least some of the user profiles in the communication network (1);
- determining a probabilistic user model of a first user, the probabilistic user model being at least partially derived from the public information;
- determining a first disclosure degree for a second user, the first disclosure degree depending on the probabilistic user model, the first disclosure degree indicating information content amount of a user profile of the second user before an action by the second user taken with respect to an item in the set of items;
- determining a second disclosure degree for the second user, the second disclosure degree depending on the probabilistic user model, the second disclosure degree indicating information content amount of the user profile of the second user after the action by the second user taken with respect to the item in the set of items; and
- determining a disclosure risk of the action by the second user on the item in the set of items, the disclosure risk depending on the first and second disclosure degrees, wherein the disclosure risk indicates a privacy effect of the action by the second user.

**Fig. 1**

**Fig. 2**

N dislike

(N/2, N/2)

N/2

N like

**Like click zones**

N dislike

(N/2, N/2)

N/2

N like

**Dislike click zones**

Safe zone

Trade-off zone

Dangerous zone

Deleterious zone

------------- Fully-rated line

- - - - Privacy line

---------- Utility line

............. Reverse line

**Fig. 3**

**Fig. 4**

Fig. 5

**Fig. 6a**

21 — Receive user click

23 — Determine weighting factors

25 — Determine first commonality value

27 — Determine second commonality value

29 — Determine utility value

31 — Determine public information

33 — Define user model

35 — Determine first disclosure degree

Go to Fig. 6b

Fig. 6b

Europäisches
Patentamt

European
Patent Office

Office européen
des brevets

# EUROPEAN SEARCH REPORT

Application Number

EP 17 18 3719

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is so well-known that its existence at the relevant date cannot reasonably be disputed. The claimed technical feature, namely client and server computers, databases intreconnected over a communication network, are therefore considered to be part of the notorious knowledge, for which no documentary evidence is deemed necessary. (see Guidelines for Examination in the European Patent Office, B-VIII, 2.2.1).<br>----- | | INV.<br>G06Q30/02<br>G06Q50/00<br>G06Q50/26 |
| | | | TECHNICAL FIELDS SEARCHED (IPC)<br><br>G06Q |

The present search report has been drawn up for all claims

| Place of search | Date of completion of the search | Examiner |
|---|---|---|
| The Hague | 31 October 2017 | Marcu, Antoniu |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)